(19)

Europäisches
Patentamt

European
Patent Office

Office européen
des brevets

(11) **EP 4 140 754 A2**

(12) **EUROPEAN PATENT APPLICATION**

(43) Date of publication:
**01.03.2023 Bulletin 2023/09**

(21) Application number: **22185838.4**

(22) Date of filing: **19.07.2022**

(51) International Patent Classification (IPC):
*B41M 5/00* *(2006.01)*    *B41M 7/00* *(2006.01)*
*C09D 11/322* *(2014.01)*    *C09D 11/324* *(2014.01)*

(52) Cooperative Patent Classification (CPC):
**B41M 7/009; B41M 5/0023; C09D 11/322;**
B41M 5/0047; B41M 5/0064; C09D 11/324

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.07.2021 JP 2021126287
20.05.2022 JP 2022083182**

(71) Applicant: **Ricoh Company, Ltd.**
**Tokyo 143-8555 (JP)**

(72) Inventors:
• **HATTA, Chikako**
**Tokyo, 143-8555 (JP)**
• **MIYAKOSHI, Ryo**
**Tokyo, 143-8555 (JP)**
• **YAMAZAKI, Takuya**
**Tokyo, 143-8555 (JP)**

(74) Representative: **Fairbairn, Angus Chisholm**
**Marks & Clerk LLP**
**15 Fetter Lane**
**London EC4A 1BW (GB)**

(54) **IMAGE FORMING METHOD AND PRINTED MATTER**

(57)    Provided is an image forming method including: applying an ink to a print medium and heating the print medium to which the ink is applied at a heating temperature of 60 degrees C or higher. The ink contains pigment-encapsulating resin particles comprising a pigment and a resin encapsulating the pigment. A proportion of the pigment alone exposed without being encapsulated with the resin is 10% by mass or less relative to solid components contained in the ink. A mass ratio of the pigment to the resin in the pigment-encapsulating resin particles is 0.25 or greater but 1.0 or less. A contact angle $\theta m$ (°) of the ink when the ink is dropped by 5 microliters onto a print medium at 73 degrees C is 25° or less.

## FIG. 3A

**Description**

BACKGROUND

Technical Field

The present disclosure relates to an image forming method and a printed matter.

Description of the Related Art

Inkjet printing apparatuses have advantages such as low noise, low running costs, and easy availability of color printing, and have widely spread in general households as digital signal output devices.

In recent years, inkjet techniques have been used not only for home use, but also for commercial use and industrial use. In commercial use and industrial use, low-ink-absorbable coated print paper (coat paper) and non-ink-absorbable plastic media are used as print media. Therefore, it is demanded that an image quality of the same level as that obtained by existing offset printing be realized on these print media by the inkjet printing method.

In attempting to improve the image quality of images obtained by inkjet printing methods, for example, a proposed method produces a pigment dispersion liquid using a pigment mixture in which a pigment and a specific resin are mixed within a predetermined range (for example, see JP-2019-099819-A), a proposed ink contains pigment-containing polymer particles and a polymer emulsion (for example, see JP-2019-014883-A) , and a proposed dispersion contains a specific kind of a resin and a pigment dispersed in the resin, where the resin is dispersed in the dispersion in the form of particles (for example, see JP-2002-256181-A).

Moreover, in order to adapt to various kinds of print media, proposed methods control the contact angle of inks (for example, see JP-63-087279-A and JP-2020-055996-A).

SUMMARY

The present disclosure has an object to provide an image forming method that can obtain a high image density and can obtain an image having an excellent gloss.

According to an embodiment of the present disclosure, an image forming method includes applying an ink to a print medium and heating the print medium to which the ink is applied at a heating temperature of 60 degrees C or higher. The ink contains pigment-encapsulating resin particles comprising a pigment and a resin encapsulating the pigment. A proportion of the pigment alone exposed without being encapsulated with the resin is 10% by mass or less relative to solid components contained in the ink. A mass ratio of the pigment to the resin in the pigment-encapsulating resin particles is 0.25 or greater but 1.0 or less. A contact angle $\theta m$ (°) of the ink when the ink is dropped by 5 microliters onto a print medium at 73 degrees C is 25° or less.

According to an embodiment of the present disclosure, a printed matter is formed by the above-described image forming method.

The present disclosure can provide an image forming method that can obtain a high image density and can obtain an image having an excellent gloss.

BRIEF DESCRIPTION OF THE SEVERAL VIEWS OF THE DRAWINGS

A more complete appreciation of the disclosure and many of the attendant advantages and features thereof can be readily obtained and understood from the following detailed description with reference to the accompanying drawings, wherein:

FIG. 1 is a schematic perspective view of an image forming apparatus of the present disclosure used in an image forming method of the present disclosure; and

FIG. 2 is a schematic perspective view of a main tank of an image forming apparatus of the present disclosure used in an image printing method of the present disclosure;

FIG. 3A is a photographic image of a surface of a coating film formed with an ink containing pigment-encapsulating resin particles of the present disclosure, observed with a scanning electron microscope;

FIG. 3B is a photographic image of a surface of a coating film formed with an ink containing: a resin-coated pigment in which a pigment is coated with a resin; and a resin emulsion, observed with a scanning electron microscope; and

FIG. 4 is a diagram illustrating a three-dimensional image built for a single pigment-encapsulating resin particle.

The accompanying drawings are intended to depict embodiments of the present invention and should not be interpreted to limit the scope thereof. The accompanying drawings are not to be considered as drawn to scale unless explicitly noted.

DETAILED DESCRIPTION

The terminology used herein is for the purpose of describing particular embodiments only and is not intended to be limiting of the present invention. As used herein, the singular forms "a", "an" and "the" are intended to include the plural forms as well, unless the context clearly indicates otherwise.

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

(Image forming method)

An image forming method of the present disclosure includes an ink applying step and a heating step, and further includes other steps as needed.

As a result of studying existing techniques in attempting to obtain a high image density and an image having an excellent scratch resistance, the inventors of the present invention have found a problem that existing techniques have difficulty forming pigment-encapsulating resin particles in which a pigment is completely enclosed within resin particles, i.e., the pigment is encapsulated with a resin.

Existing techniques prepare pigment-coating resin particles in which an exposed surface of a pigment is coated with a resin. In this case, the pigment often has a portion that is left uncoated with the resin and exposed to the outside within the exposed surface of the pigment. When a water-based ink containing the pigment-coating resin particles is printed on a print medium and then subjected to rapid drying such as heating drying, there occurs a problem that the pigment contained in the printed ink coating film flocculates, to increase the surface roughness of the coating film and cause diffuse reflection of light, leading to a lower image density and a lower gloss than when the ink is not subjected to heating drying.

There is another problem that non-permeating substrates may repel inks and may be exposed to the outside, leading to degradation of the image density and gloss.

The inventors of the present invention have found that an image forming method can obtain an image having a high image density and gloss when the image forming method includes a step of heating a substrate during printing, under control of a contact angle, on the non-permeating substrate being heated, of an ink containing pigment-encapsulating resin particles encapsulating a pigment. That is, the inventors of the present invention have found it possible to improve image density and gloss by suppressing a pigment from flocculating and a substrate from being exposed to the outside, even when an ink is printed on a non-permeating substrate being subjected to heating drying.

<Ink applying step>

The ink applying step is a step of applying an ink to a print medium, wherein the ink contains pigment-encapsulating resin particles containing: a pigment and a resin encapsulating the pigment. The ink applying step is performed by an ink applying unit.

The ink applying unit is not particularly limited and may be appropriately selected depending on the intended purpose. Examples of the ink applying unit include, but are not limited to, an inkjet system.

The inkjet system is not particularly limited and may be appropriately selected depending on the intended purpose. Examples of a driving system for a discharging head include, but are not limited to, a piezoelectric element actuator using, for example, PZT, a thermal energy applying system, an on-demand head using an electrostatic force-applied actuator, and a continuous jetting, charge-controlled-type head.

<<Ink>>

The ink contains pigment-encapsulating resin particles, which are formed of a resin encapsulating a pigment, preferably contains water, an organic solvent, and a surfactant, and further contains other components as needed.

A contact angle $\theta$m (°) of the ink when the ink is dropped by 5 microliters onto a print medium at 73 degrees C is 25° or less, preferably 5° or greater but 25° or less. When the contact angle of the ink is 25° or less, an ink droplet can sufficiently wet and spread, and can improve the image density.

A polyvinyl chloride film having Rz of less than 10 micrometers may be used as a contact angle measuring medium for measuring the contact angle. Examples of commercially available polyvinyl chloride films include, but are not limited to, MPI1000 (available from AVERY DENNISON CORPORATION) and CPPVWP1300 (available from Sakurai Co., Ltd.). These polyvinyl chloride films are non-limiting examples, and any other polyvinyl chloride films may be used.

The contact angle can be measured by a method of dropping the ink by 5 microliters onto a PVC film (available from AVERY DENNISON CORPORATION, MPI1000) heated on a hot plate (NINOS ND-1, available from As One Corporation) to the same temperature as the heating temperature during printing, and subsequently measuring the contact angle $\theta$m (°) of the ink five seconds after dropping, using an automatic contact angle meter (available from Kyowa Interface Science Co., Ltd.). As the contact angle $\theta$m (°), an average value of five measurements is used.

-Pigment-encapsulating resin particles-

The pigment-encapsulating resin particles are resin particles in which a pigment is encapsulated with a resin. The shape of the pigment-encapsulating resin particles is not particularly limited and may be appropriately selected depending on the intended purpose so long as the pigment is encapsulated with the resin. Examples of the shape of the pigment-encapsulating resin particles include, but are not limited to, a spherical shape, an elliptical shape, and indefinite shapes. Among these, a spherical shape is preferable, and a true-spherical shape is more preferable.

The pigment-encapsulating resin particles are resin particles having a pigment exposure ratio (%) of 10% or less, and preferably 5% or less per particle. When the exposure ratio is 5% or less, flocculation of the pigment can be suppressed, and the image density of an image to be formed with a heating step can be improved.

The pigment exposure ratio per particle of the pigment-encapsulating resin particles can be measured with a transmission electron microscope (TEM). An example of a specific procedure of the exposure ratio measuring method will be described.

First, an ink containing the pigment-encapsulating resin particles is diluted with ion-exchanged water in a manner that the solid concentration will be 0.1%, to produce a sample liquid.

Next, the sample liquid is poured by 1 microliter onto a hydrophilized collodion membrane pasted-mesh (a collodion membrane-pasted mesh CU150 MESH available from Nisshin EM Co., Ltd.) with a micropipette, and quickly sucked away with filter paper cut into a triangular shape.

Next, an EM stainer diluted ten-fold is poured by 1 microliter with a micropipette, and quickly sucked away with filter paper cut into a triangular shape.

After drying at reduced pressure, the resultant is observed with a transmission electron microscope (JEM-2100F available from JEOL Ltd.) at an accelerating voltage of 200 kV at a magnification of ×40,000.

Five or more images representing a field of view including three or more particles having a volume-based particle diameter of 100 nm or greater are captured at arbitrary different positions, to measure three or more pigment-encapsulating resin particles in each field of view and calculate the average of values each represented by "pigment exposure area/area of pigment-encapsulating resin particle" per pigment-encapsulating resin particle, as the "pigment exposure ratio (%) of the pigment-encapsulating resin particles".

To measure the region of the "pigment" and the region of the "resin" in a pigment-encapsulating resin particle, the regions are distinguished by comparison between an image of the "pigment" alone and an image of a "particle formed of the resin alone" observed separately.

It is also possible to calculate the pigment exposure ratio (%) of the pigment-encapsulating resin particles by building a three-dimensional image of a single pigment-encapsulating resin particle. In order to build a three-dimensional image of a single pigment-encapsulating resin particle, first, continuous inclined projected images of one particle are captured. The captured images are subjected to a three-dimensional structure building process using a "FIJI" application of image processing software (IMAGE J), to build a three-dimensional image of a single particle. From the built three-dimensional image, a "surface area S1 of the pigment-encapsulating resin particle" and a "surface area S2 of the pigment exposed at the surface of the pigment-encapsulating resin particle" are measured, to calculate a "pigment exposure ratio (%) of the pigment-encapsulating resin particle" represented by Formula 1 below.

$$(S2/S1) \times 100 \qquad\qquad ---\text{Formula 1}$$

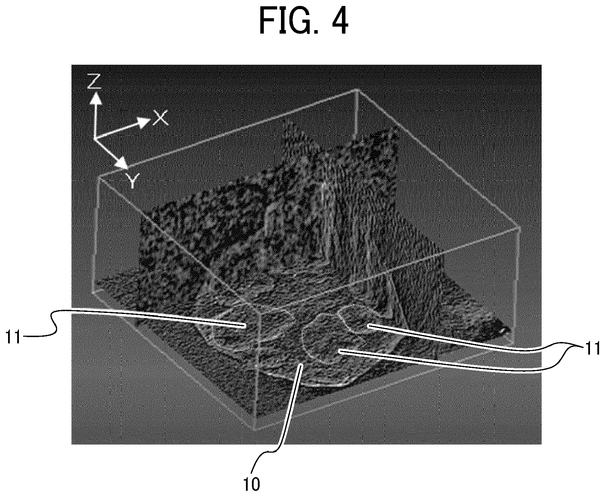

FIG. 4 is a diagram illustrating an example of a three-dimensional image built for a single pigment-encapsulating resin particle. As illustrated in FIG. 4, a state of a single pigment-encapsulating resin particle 10 encapsulating a pigment 11 can be observed using the three-dimensional image built for the single pigment-encapsulating resin particle.

In the present disclosure, a "pigment-encapsulating" state represents a state in which a state of unencapsulated pigment particles being dispersed or a state of an exposed surface of the pigment appearing on an exposed surface of a resin particle is absent.

The "state in which a state of an exposed surface of the pigment appearing on an exposed surface of a resin particle is absent" represents a state in which the "pigment exposure ratio (%) of an ink containing the pigment-encapsulating resin particles" calculated based on observation performed with a scanning electron microscope according to the procedure described below is 10% or less and an average thickness of the resin is 10 nm or greater. Here, the average thickness is based on the thickness of the resin obtained by observing twenty or more pigment-encapsulating resin particles with a transmission electron microscope and obtaining twenty or more measurements of the distance (thickness) from the surface (circumference) of each particle to the surface of the pigment. For example, JP-2016-196621-A, JP-2002-322396-A, JP-2019-099819-A, and JP-2005-120136-A propose coated pigments and microencapsulated pigments, which, however, are not in the form of the pigment being encapsulated within resin particles in a resin emulsion, and are different from the pigment-encapsulating resin particles.

[Pigment exposure ratio (%) of an ink containing pigment-encapsulating resin particles]

The pigment encapsulation degree of the pigment-encapsulating resin particles can be evaluated by quantification of the area of an unencapsulated, exposed pigment with respect to the surface area of a coating film that is formed by applying a dispersion liquid (e.g., an ink) containing the pigment-encapsulating resin particles (i.e., an area ratio of the exposed pigment over the coating film).

A coating film represents a product in a film shape, obtained from drying and solidification of the ink and a water dispersion applied on a print medium.

The pigment exposure ratio over the coating film can be calculated in the manner described below, using, for example, a scanning electron microscope (SEM).

Using ion-exchanged water, an ink containing the pigment-encapsulating resin particles is prepared in a manner that the solid concentration will be 10.75% by mass.

Next, the ink is applied on coated paper (LUMIART GLOSS 130, available from Stora Enso Oyj) using a 0.15 mm bar coater, and dried overnight at 25 degrees C, to form a coating film having an average thickness of 2 micrometers. The coating film is cut out, and secured on a SEM observation stub using a carbon tape. Without being subjected to a conductivity imparting treatment, the resultant is observed using a scanning electron microscope (available from Zeiss AG, MERLIN) at an accelerating voltage of 0.75 kV at a magnification of from ×2,000 through ×20,000 using a backscattered-electron detector. By this observation method, it is possible to distinguish between the exposed pigment and the resin from contrast differences in the SEM image based on the backscattered electron yield difference between carbon black and the resin.

Separately, using samples in which a dispersion of a pigment alone and an emulsion of a resin alone are mixed at arbitrary mix proportions, area ratios of an exposed pigment over a coating film are quantified in the same manner as the method described above, and used as a calibration curve. In this way, it is possible to quantify an exposed pigment contained in the pigment-encapsulating resin particles.

The area ratio of an exposed pigment is obtained by binarization of a SEM observed image, and it is preferable to calculate an average of three or more fields of view observed at arbitrary different positions. Any sample that cannot be observed due to charge up under the observation condition described above has a tendency that the pigment exposure ratio is low. This phenomenon is often observed when the pigment exposure ratio is 3% or less. For binarization of a SEM observed image, a binarization process that automatically starts when a default algorithm of image processing software (IMAGE-J) is selected is performed.

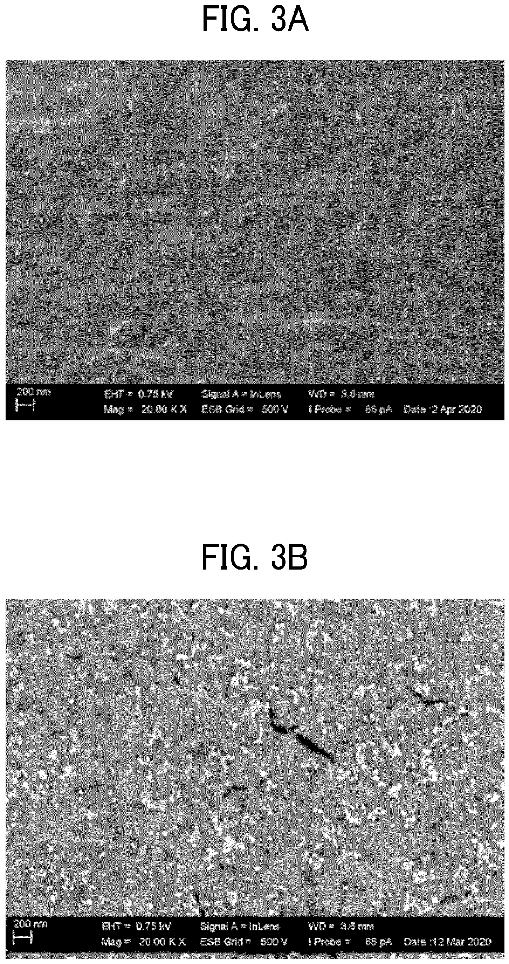

For example, FIG. 3A is a view illustrating an example when the surface of a coating film formed with the ink containing pigment-encapsulating resin particles of the present disclosure is observed with a scanning electron microscope. FIG. 3B is a view illustrating an example when the surface of a coating film formed with an ink containing: a resin-coated pigment in which a pigment is coated with a resin; and a resin emulsion is observed with a scanning electron microscope. In the scanning electron microscopic images, white portions represent pigment regions. As illustrated in FIG. 3A, the surface of the coating film formed with the ink containing pigment-encapsulating resin particles of the present disclosure is observed to have almost uniform in-plane contrast. That is, almost no pigment region is observed. On the other hand, as illustrated in FIG. 3B, the surface of the coating film formed with the resin-coated pigment is observed to have a non-uniform in-plane contrast and have pigment regions. This means that the pigment is exposed on the surface of the coating film when the pigment is only coated with the resin.

The form of the pigment-encapsulating resin particles is not particularly limited and may be appropriately selected depending on the intended purpose. Examples of the form of the pigment-encapsulating resin particles include, but are not limited to, an emulsion form. Encapsulation of the pigment within the pigment-encapsulating resin particles having an emulsion form enables suppression of pigment desorption into a medium.

The emulsion represents a state of particles being dispersed in a solvent such as water and an organic solvent. The particles are not particularly limited and may be appropriately selected depending on the intended purpose so long as the particle shape can be maintained in a solvent used. Examples of the particles include, but are not limited to, a solid and a liquid.

The distance from the circumference (particle surface) of the pigment-encapsulating resin particles to the pigment (i.e., the thickness of the resin) is preferably 10 nm or greater and more preferably 10 nm or greater but 50 nm or less.

The distance from the circumference (particle surface) of the pigment-encapsulating resin particles to the pigment (i.e., the thickness of the resin) is obtained by observing twenty or more pigment-encapsulating resin particles and obtaining twenty or more measurements of the thickness from the resin surface layer on the outer shell of each particle to the pigment, and calculating the average according to the same method as the observation method for the "pigment exposure ratio (%) of the pigment-encapsulating resin particles".

It is preferable that the pigment-encapsulating resin particles each contain two or more primary particles of the pigment. This increases the pigment density in the pigment-encapsulating resin particles and improves the image density.

Examples of the method for confirming that the pigment-encapsulating resin particles each contain two or more primary particles of the pigment include, but are not limited to, an observation method using a transmission electron microscope. When a transmission electron microscope is used, it is possible to distinguish between the pigment in the pigment-encapsulating resin particles and the resin based on contrast differences in the image.

The aspect ratio of the pigment-encapsulating resin particles is preferably 1.0 or greater but 1.7 or less, and more preferably 1.0 or greater but 1.2 or less. The aspect ratio of the pigment-encapsulating resin particles is calculated based on observation of the pigment-encapsulating resin particles with the transmission electron microscope (TEM) described above.

Specifically, a plurality of images representing a field of view including pigment-encapsulating resin particles that do not overlap with any other particles are captured at arbitrary different observation positions. An arbitrary pigment-encapsulating resin particle is selected and extracted by binarization using a "FIJI" application of image processing software (IMAGE J), and analyzed. Twenty particles are analyzed. A ratio (longer diameter/shorter diameter) of the longer diameter to the shorter diameter of a pigment-encapsulating resin particle is calculated from the twenty pigment-encapsulating resin particles, and the average (average aspect ratio) of the values is calculated. For calculation of the ratio of the longer diameter to the shorter diameter, the length of an axis (longer axis) having the longest length from any end of a particle to an opposite end of the particle is defined as the longer diameter, and the length of the particle in the direction orthogonally intersecting the longer axis at the center of the longer axis is defined as the shorter diameter. When the aspect ratio of the pigment-encapsulating resin particles is 1.0 or greater but 1.7 or less, there is an advantage that the smoothness of a coating film surface is improved and the image density is improved.

The sphericity of the pigment-encapsulating resin particles is preferably 0.7 or greater but 1.0 or less and more preferably 0.8 or greater but 1.0 or less. A shape having a sphericity closer to 1.0 represents a shape closer to a true sphere. When the sphericity of the pigment-encapsulating resin particles is 0.7 or greater but 1.0 or less, the smoothness of a coating film surface is improved and the image density is improved.

The sphericity of the pigment-encapsulating resin particles is a value defined as the second power of [(area of an extracted particle $\times 4\pi$)/perimeter of the extracted particle]. The sphericity of the pigment-encapsulating resin particles is calculated by observing the pigment-encapsulating resin particles and measuring the area of the pigment-encapsulating resin particles on a flat observation surface and the perimeter of the particles on the same surface according to the same observation method for the pigment-encapsulating resin particles using the transmission electron microscope (TEM) as in the method for calculating the aspect ratio of the pigment-encapsulating resin particles.

The volume-based cumulative 50% diameter of the pigment-encapsulating resin particles is preferably 30 nm or greater but 300 nm or less, more preferably 60 nm or greater but 200 nm or less, and yet more preferably 70 nm or greater but 150 nm or less. When the volume average particle diameter (D50) of the pigment-encapsulating resin particles is 40 nm or greater, it is possible to suppress viscosity increase and improve dispersion stability of the pigment-encapsulating resin particles. When the volume average particle diameter (D50) of the pigment-encapsulating resin particles is 300 nm or less, the pigment-encapsulating resin particles are suppressed from settling and have a good particle storage stability.

The method for measuring the volume-based cumulative 50% diameter of the pigment-encapsulating resin particles is not particularly limited and may be appropriately selected depending on the intended purpose. For example, the volume-based cumulative 50% diameter of the pigment-encapsulating resin particles can be measured by a laser diffraction method using a scattering particle diameter distribution analyzer (LA-960, available from Horiba, Ltd.).

In a specific method for measuring the volume-based cumulative 50% diameter of the pigment-encapsulating resin particles, a sample is diluted with ion-exchanged water in a manner that the transmittance (R) and the transmittance (B) during measurement with a laser diffraction/scattering particle diameter distribution analyzer (LA-960, available from Horiba, Ltd.) will be from 30% through 70%, and the obtained sample liquid is partially poured into a batch-type cell (spacer: 50 micrometers). The resultant is set on a sample holder and measured.

The existence ratio of the pigment-encapsulating resin particles in the ink is not particularly limited. The ratio between the pigment-encapsulating resin particles and resin particles free of the pigment may be appropriately selected. The existence amount of the pigment-encapsulating resin particles is a ratio occupied by the pigment-encapsulating resin particles in all particles that have a volume-based particle diameter of 100 nm or greater in each of five or more images representing a field of view including three or more particles having a volume-based particle diameter of 100 nm or greater, captured by observation with the transmission electron microscope at arbitrary different positions. The average of the ratios obtained from all of the images is preferably 30% or higher and more preferably 50% or higher. When the existence ratio of the pigment-encapsulating resin particles is 30% or higher, the image density can be increased by the high existence ratio of the pigment-encapsulating resin particles.

-Pigment-

Examples of the pigment include, but are not limited to, organic pigments and inorganic pigments. Among these pigments, inorganic pigments are preferable.

The proportion of the pigment alone exposed without being encapsulated within the pigment-encapsulating resin particles (hereinafter, may be referred to as exposed pigment) is 10% by mass or less and preferably 5% by mass or less relative to the total solid content in the ink. When the proportion of the pigment particles that are not encapsulated within the pigment-encapsulating resin particles is 10% by mass or less, flocculation of the pigment can be suppressed, and the image density degradation tends not to occur.

The pigment particles that are not encapsulated within the pigment-encapsulating resin particles are pigment particles of which pigment exposure ratio per particle is greater than 10%. The exposure ratio can be measured by the same method as the method for measuring the exposure ratio of the pigment-encapsulating resin particles.

Examples of the inorganic pigment include, but are not limited to, titanium oxide, iron oxide, calcium carbonate, barium sulfate, aluminum hydroxide, barium yellow, cadmium red, chrome yellow; carbon black (C.I. Pigment Black 7) produced by known methods, such as furnace black, lamp black, acetylene black, and channel black; and metals such as copper and iron (C.I. Pigment Black 11). Among these inorganic pigments, carbon black is preferable.

The primary particle diameter of the carbon black is preferably 15 nm or greater but 100 nm or less. When the primary particle diameter of the carbon black is in the range described above, color developability is improved.

The DBP absorption of the carbon black is preferably 30 mL/100 g or greater but 150 mL/100 g or less. When the DBP absorption of the carbon black is preferably 30 mL/100 g or greater but 150 mL/100 g or less, pigment dispersibility of a pigment pre-dispersion described below can be improved.

A self-dispersible pigment may also be used. The self-dispersible pigment represents a pigment that has dispersion stability by means of a functional group incorporated into the surface of the pigment directly or via any other group of atoms. As the pigment before dispersion stability is imparted, for example, various known pigments can be used, such as those listed in International Publication No. WO 2009/014242.

The mass ratio (pigment/resin) of the pigment to the resin in the pigment-encapsulating resin particles is 0.25 or greater but 1.0 or less and preferably 0.3 or greater but 0.75 or less. When the mass ratio (pigment/resin) of the pigment to the resin in the pigment-encapsulating resin particles is 0.25 or greater, image density can be improved. When the mass ratio (pigment/resin) of the pigment to the resin in the pigment-encapsulating resin particles is 1.0 or less, image durability can be improved.

-Resin-

The resin in the pigment-encapsulating resin particles is not particularly limited and may be appropriately selected depending on the intended purpose. Examples of the resin include, but are not limited to, a self-emulsifying resin.

The self-emulsifying resin represents a resin that can form an emulsified state through stirring and mixing of a resin solution with water.

As the self-emulsifying resin, for example, a resin containing a nonionic, anionic or cationic hydrophilic group is preferable. Among such resins, a resin containing an anionic hydrophilic group is more preferable.

Examples of the nonionic hydrophilic group include, but are not limited to, an ester group and an ether group (bond).

Examples of the anionic hydrophilic group include, but are not limited to, a carboxyl group, a carboxylate group, a sulfonic acid group, and a sulfonate group. As the anionic hydrophilic group, a carboxylate group or a sulfonate group that is at least partially neutralized with, for example, a basic compound (neutralizer) is preferable.

The neutralizer that can be used to neutralize the anionic hydrophilic group is not particularly limited and may be appropriately selected depending on the intended purpose. Examples of the neutralizer include, but are not limited to, basic compounds such as organic amines (e.g., ammonia, triethylamine, pyridine, and morpholine) and alkanol amines (e.g., monoethanol amine); and metallic basic compounds containing, for example, Na, K, Li, and Ca.

Examples of the cationic hydrophilic group include, but are not limited to, amine salts and quaternary ammonium salts.

The acid value of the resin is preferably 5 mgKOH/g or greater but 50 mgKOH/g or less, and more preferably 10 mgKOH/g or greater but 30 mgKOH/g or less. When the acid value of the resin is 5 mgKOH/g or greater, the pigment-encapsulating resin particles have an excellent dispersion stability, and consequently, a uniform particle diameter, a good dispersibility and a good dischargeability. When the acid value of the resin is 50 mgKOH/g or less, the resin has an appropriate hydrophilicity, an improved water resistance, and a good particle stability.

Examples of the method for measuring the acid value of the resin include, but are not limited to, a method of measuring an acid value by adding the resin to a tetrahydrofuran (THF) solution and titrating the resultant using a 0.1 M potassium hydroxide methanol solution.

The resin is not particularly limited and may be appropriately selected depending on the intended purpose. Examples of the resin include, but are not limited to, polyester resins, urethane resins, and acrylic resins. Among these resins, polyester resins are preferable.

-Polyester resin-

The polyester resin is preferably a self-emulsifying resin. The polyester resin is obtained by polycondensation of a polyvalent alcohol with either or both of a polyvalent carboxylic acid such as polyvalent carboxylic acid, polyvalent carboxylic anhydride, and polyvalent carboxylate, and a derivative of the polyvalent carboxylic acid. The polyester resin contains an aromatic unit in part or the whole of the composition. That is, the aromatic series-containing polyester contains a polyvalent alcohol, and either or both of a polyvalent carboxylic acid such as polyvalent carboxylic acid, polyvalent carboxylic anhydride, and polyvalent carboxylate, and a derivative of the polyvalent carboxylic acid as the constituent components.

--Polyvalent alcohol component--

Examples of the polyvalent alcohol component include, but are not limited to, divalent alcohols (diols), specifically, alkylene glycols containing from 2 through 36 carbon atoms (e.g., ethylene glycol, 1,2-propylene glycol, 1,3-propylene glycol, 1,4-butylene glycol, 1,6-hexanediol, and trimethylolpropane); alkylene ether glycols containing from 4 through 36 carbon atoms (e.g., diethylene glycol, triethylene glycol, dipropylene glycol, polyethylene glycol, polypropylene glycol, and polybutylene glycol); alicyclic diols containing from 6 through 36 carbon atoms (e.g., 1,4-cyclohexane dimethanol, and hydrogenated bisphenol A); adducts of the alicyclic diols with alkylene oxides [e.g., ethylene oxides (hereinafter, abbreviated as "EO"), propylene oxides (hereinafter, abbreviated as "PO"), and butylene oxides (hereinafter, abbreviated as "BO")] containing from 2 through 4 carbon atoms (added by from 1 through 30 moles); and adducts of bisphenols (e.g., bisphenol A, bisphenol F, and bisphenol S) with alkylene oxides (e.g., EO, PO, and BO) containing from 2 through 4 carbon atoms (added by from 2 through 30 moles).

In addition to the divalent diol, the polyester resin may contain trivalent or higher (from trivalent through octavalent or higher) alcohol components. Specific examples of the trivalent or higher (from trivalent through octavalent or higher) alcohol components include, but are not limited to, from trivalent through octavalent or higher aliphatic polyvalent alcohols containing from 3 through 36 carbon atoms (e.g., alkane polyols and intramolecular or intermolecular dehydrated products thereof, such as glycerin, triethylolethane, trimethylolpropane, pentaerythritol, sorbitol, sorbitan, polyglycerin, dipentaerythritol; and sugars and derivatives thereof, such as sucrose and methyl glycoside); adducts of the aliphatic polyvalent alcohols with alkylene oxides (e.g., EP, PO, and BO) containing from 2 through 4 carbon atoms (added by from 1 through 30 moles); adducts of trisphenols (e.g., trisphenol PA) with alkylene oxides (e.g., EO, PO, and BO) containing from 2 through 4 carbon atoms (added by from 2 through 30 moles); and adducts of novolac resins (e.g., phenol novolac and cresol novolac, with an average degree of polymerization of from 3 through 60) with alkylene oxides (e.g., EO, PO, and BO) containing from 2 through 4 carbon atoms (added by from 2 through 30 moles). One of these polyvalent alcohols may be used alone or two or more of these polyvalent alcohols may be used in combination.

--Polyvalent carboxylic acid component--

Examples of the polyvalent carboxylic acid component include, but are not limited to, divalent carboxylic acids (dicarboxylic acids), specifically, alkane dicarboxylic acids containing from 4 through 36 carbon atoms (e.g., succinic acid, adipic acid, and sebacic acid); alkenyl succinic acids (e.g., dodecenyl succinic acid); alicyclic dicarboxylic acids containing from 4 through 36 carbon atoms [e.g., dimer acid (dimerized linoleic acid)]; alkene dicarboxylic acids containing from 4 through 36 carbon atoms (e.g., maleic acid, fumaric acid, citraconic acid, and mesaconic acid); and aromatic dicarboxylic acids containing from 8 through 36 carbon atoms (e.g., phthalic acid, isophthalic acid, and terephthalic acid or derivatives thereof, and naphthalene dicarboxylic acid). One of these polyvalent carboxylic acids may be used alone or two or more of these polyvalent carboxylic acids may be used in combination.

Among these polyvalent carboxylic acids, alkane dicarboxylic acid containing from 4 through 20 carbon atoms and aromatic dicarboxylic acid containing from 8 through 20 carbon atoms are preferable. Examples of the polyvalent carboxylic acid components also include, but are not limited to, acid anhydrides or lower alkyl (containing from 1 through 4 carbon atoms) esters (e.g., methyl ester, ethyl ester, and isopropyl ester) of those described above. One of these polyvalent carboxylic acid components may be used alone or two or more of these polyvalent carboxylic acid components may be used in combination.

In addition, it is also suitable to use ring-opening-polymerizable components such as polylactic acid and polycarbonate diol.

The polyester resin can be isolated by a method of, for example, drying and hardening a dispersion formed of the pigment-encapsulating resin particles by heating drying, adding the obtained dry hard product to a tetrahydrofuran (THF) solution to dissolve the polyester resin, removing the contained pigment by, for example, centrifugation and filtration, and then removing THF. In this way, the polyester resin can be isolated. As needed, recycling GPC may be employed.

The number average molecular weight (Mn), the weight average molecular weight (Mw), and the molecular weight distribution (Mw/Mn) of the polyester resin are a number average molecular weight, a weight average molecular weight, and a molecular weight distribution measured by gel permeation chromatography (GPC) using a calibration curve generated with polystyrene samples having known molecular weights as a reference. Columns used have exclusion limits of 60,000, 20,000, and 10,000 and are serially coupled with each other for use.

The molecular weight of the polyester resin is not particularly limited and may be appropriately selected depending on the intended purpose. The weight average molecular weight (Mw) of the polyester resin in the GPC measurement is preferably 2,000 or greater but 15,000 or less and more preferably 4,000 or greater but 12,000 or less.

The weight average molecular weight (Mw) of the polyester resin is measured by, for example, GPC under the conditions described below.

Instrument: GPC (available from Tosoh Corporation)
Detector: RI
Measurement temperature: 40 degrees C
Mobile phase: tetrahydrofuran
Flow rate: 0.45 mL/min

The glass transition temperature (Tg) of the polyester resin is not particularly limited, may be appropriately selected depending on the intended purpose, and is preferably 30 degrees C or higher but 100 degrees C or lower and more preferably 50 degrees C or higher but 80 degrees C or lower.

The softening temperature of the polyester resin is not particularly limited, may be appropriately selected depending on the intended purpose, and is preferably 60 degrees C or higher but 180 degrees C or lower and more preferably 80 degrees C or higher but 150 degrees C or lower.

The molecular structure of the polyester resin can be confirmed by, for example, NMR measurement, GC/MS measurement, LC/MS measurement, and IR measurement using a solution or a solid.

A hitherto commonly used method can be used as the method for synthesizing the polyester resin. Examples of the method include, but are not limited to, the method described below.

In the absence of a solvent or in the presence of an organic solvent, the polyvalent alcohol and the polyvalent carboxylic acid described above are allowed to undergo polycondensation. In this way, the polyester resin can be synthesized.

Next, the method for producing the pigment-encapsulating resin particles of the ink of the present disclosure will be described in detail.

[Method for producing pigment-encapsulating resin particles]

The method for producing the pigment-encapsulating resin particles of the ink of the present disclosure includes a step of mixing an organic solvent and a pigment to prepare a pigment pre-dispersion (hereinafter, referred to as "pigment pre-dispersion preparing step" or "step 1"), a step of mixing the obtained pigment pre-dispersion and a resin to prepare a pigment-dispersed resin solution (hereinafter, referred to as "pigment-dispersed resin solution preparing step" or "step 2"), a step of mixing the obtained pigment-dispersed resin solution with water to prepare a pigment-encapsulating resin particle dispersion liquid (hereinafter, referred to as "pigment-encapsulating resin particle dispersion liquid preparing step" or "step 3"), and a step of removing the organic solvent from the obtained pigment-encapsulating resin particle dispersion liquid (hereinafter, referred to as "organic solvent removing step" or "step 4"), and further includes other steps as needed.

<Pigment pre-dispersion preparing step (step 1)>

The pigment pre-dispersion preparing step is a step of mixing an organic solvent and a pigment to prepare a pigment pre-dispersion.

The pigment is the pigment described above.

The organic solvent is not particularly limited and may be appropriately selected depending on the intended purpose so long as the organic solvent can dissolve a resin in the next pigment-dispersed resin solution preparing step. Examples of the organic solvent include, but are not limited to, ethyl acetate, methyl ethyl ketone, and acetone. Among these organic solvents, ketone-based organic solvents such as methyl ethyl ketone and acetone are preferable.

The device used in the pigment pre-dispersion preparing step is not particularly limited and may be appropriately selected depending on the intended purpose. Examples of the device include, but are not limited to, a disperser.

The volume average particle diameter (D50) of the pigment in the pigment pre-dispersion is preferably 10 nm or greater but 150 nm or less and more preferably 20 nm or greater but 120 nm or less because the pigment-encapsulating resin particles can have a small particle diameter.

The volume average particle diameter (D50) of the pigment can be measured with, for example, a zeta potential/particle measuring system (ELSZ-1000, available from Otsuka Electronics Co., Ltd.).

Specifically, a measurement sample is diluted with ion-exchanged water or, as needed, an organic solvent in a manner that the solid concentration of the sample will be 0.01 wt%. The obtained solution is partially poured into a quartz cell, set on a sample holder, and measured at a temperature of 25 degrees C, with dust cutting (number of times; 5, Upper: 5, and Lower: 100), by an integrated number of times of 70.

The content of the pigment in the pigment pre-dispersion is not particularly limited and may be appropriately selected depending on the intended purpose.

It is preferable to use a pigment dispersant in the pigment pre-dispersion preparing step.

A hydrophilic or hydrophobic property of the pigment dispersant is not particularly limited and may be appropriately selected depending on the intended purpose. A hydrophobic pigment dispersant is preferable because it makes easier for the pigment to be encapsulated with a resin, and the image density is improved. The pigment dispersant is hydrophobic when the pigment dispersant is insoluble in water, and is hydrophilic when soluble in water. The pigment dispersant is insoluble in water when an insoluble component is visible observed when the pigment dispersant (1 g) is added in water (100 g) at 25 degrees C and shaken. The pigment dispersant is soluble in water when no undesirable component is visibly observed under the condition described above.

The pigment dispersant is not particularly limited and may be appropriately selected depending on the intended purpose.

Examples of the pigment dispersant include, but are not limited to, (meth)acrylic-based resins, styrene-(meth)acrylic-based resins, hydroxyl group-containing carboxylic acid ester, salts of polyaminoamide and acid esters, polycarboxylic acid salts, salts of polyaminoamide and polar acid ester, unsaturated acid esters, copolymers, modified polyurethane, modified polyacrylate, polyether ester-type anionic activators, salt of naphthalenesulfonic acid formalin condensate, salt of aromatic sulfonic acid formalin condensate, polyoxyethylene alkyl phosphoric acid ester, and polyoxyethylene nonylphenyl ether, and stearylamine acetate. One of these pigment dispersants may be used alone or two or more of these pigment dispersants may be used in combination.

A commercially available product can be used as the pigment dispersant. Examples of the commercially available product include, but are not limited to, JONCRYL (available from Johnson Polymers, Ltd.), ANTI-TERRA-U (available from Byk Chemie GmbH), DISPERBYK (available from Byk Chemie GmbH), EFKA (available from Efka Chemicals B.V), FLOREN (available from Kyoeisha Chemical Co., Ltd.), DISPARLON (available from Kusumoto Chemicals, Ltd.), AJISPER (available from Ajinomoto Fine-Techno Co., Inc.), DEMOL (available from Kao Corporation), HOMOGENOL and EMULGEN (both available from Kao Corporation), SOLSPERSE (available from Lubrizol Corporation), and NIKKOL (available from Nikko Chemicals Co., Ltd.). One of these commercially available products may be used alone or two or more of these commercially available products may be used in combination.

The ratio between the pigment and the pigment dispersant in the pigment pre-dispersion is not particularly limited, may be appropriately selected depending on the intended purpose, and is preferably from 4:0.2 through 4:4 and more preferably from 4:0.5 through 4:3 in terms of improving dispersibility of the pigment pre-dispersion.

As needed, it is preferable to filtrate coarse particles from the pigment pre-dispersion using, for example, a filter and a centrifuge.

The pigment pre-dispersion can be produced by a method of dissolving or suspending the pigment dispersant in an organic solvent as needed, adding a resin and the pigment, stirring the resultant, and subsequently dispersing the resultant using a commonly used known disperser.

The disperser is not particularly limited and may be appropriately selected depending on the intended purpose. Examples of the disperser include, but are not limited to, an anchor blade, a disper blade, a homomixer, a ball mill, a roll mill, a bead mill, a sand mill, an attritor, a pearl mill, a DYNO mill, a high-pressure homogenizer, an ultrasonic disperser, an agitator mill, a paint shaker, a grain mill, a kobol mill, and a jet mill. Among these dispersers, a roll mill, a bead mill, a sand mill, a DYNO mill, a high-pressure homogenizer, and a paint shaker are preferable in terms of dispersion efficiency.

<Pigment-dispersed resin solution preparing step (step 2)>

The pigment-dispersed resin solution preparing step is a step of mixing the obtained pigment pre-dispersion and a resin to prepare a pigment-dispersed resin solution.

The pigment-dispersed resin solution is obtained by mixing the pigment pre-dispersion obtained in the pigment pre-dispersion preparing step, a resin, and as needed, a basic compound, an organic solvent, and an additive, and stirring these materials.

The resin is the resin described above.

The mixing stirring device used in the pigment-dispersed resin solution preparing step is not particularly limited and may be appropriately selected depending on the intended purpose. Examples of the mixing stirring device include, but are not limited to, the device described in the pigment pre-dispersion preparing step. Among these devices, a high-speed stirring device including an anchor blade or a disper blade is preferable in terms of uniformly stirring a high-viscosity solution and efficiently dissolving resin particles.

The procedure for preparing the pigment-dispersed resin solution is not particularly limited. A solid resin may be added to the pigment pre-dispersion obtained in the pigment pre-dispersion preparing step, or a solid resin may be added thereto after it is solubilized in an organic solvent.

It is preferable that the volume average particle diameter (D50) of the pigment in the pigment-dispersed resin solution be the same as the volume average particle diameter (D50) of the pigment in the pigment pre-dispersion obtained in the pigment pre-dispersion preparing step. It is more preferable that there is no difference between the pigment pre-dispersion preparing step and the pigment-dispersed resin solution preparing step.

The resin is used for encapsulating the pigment in the pigment-encapsulating resin particle dispersion liquid preparing step. It is preferable that the resin contain a nonionic, anionic, or cationic hydrophilic group, more preferably an anionic hydrophilic group.

When the resin is an anionic resin, it is preferable to neutralize part or the whole of the anionic group with a basic compound in order that the resin may form an emulsion in an aqueous medium and maintain dispersion stability in the aqueous medium.

The ratio of the pigment to the resin is preferably 0.2 or greater but 0.75 or less and more preferably 0.3 or greater but 0.6 or less. When the ratio of the pigment to the resin is 0.2 or greater, the pigment concentration is appropriate and the image density on a printed matter is high. When the ratio of the pigment to the resin is 0.75 or less, most of the pigment particles can be encapsulated with the resin, and coating film roughness after heating drying can be suppressed, leading to a good image density. The ratio of the pigment to the resin can be calculated from the preparation ratio or from the dispersion (e.g., a water dispersion or an ink) of the pigment-encapsulating resin particles to be obtained finally.

The ratio of the pigment to the resin can be calculated from the dispersion of the pigment-encapsulating resin particles by a method of, for example, thermally analyzing a dry hard film of the dispersion of the pigment-encapsulating resin particles using thermogravimetry/differential thermal analyzer (TG-DTA). Specifically, using the thermogravimetry/differential thermal analyzer, a dry hard film of the dispersion of the pigment-encapsulating resin particles is subjected to temperature elevation to and retention at the thermal decomposition temperature of the resin under a nitrogen gas atmosphere. The weight by which the dry hard film is decomposed can be calculated as the weight of the resin, and the weight of the residue can be calculated as the weight of the pigment. The ratio of a highly heat-resistant resin that cannot be completely decomposed by thermal decomposition under a nitrogen gas atmosphere can be calculated based on heating loss and a calibration curve of the ratio of the pigment to the resin. Specifically, a plurality of mixtures in which a pigment and a resin are mixed at arbitrary mix proportions are produced, and each mixture is subjected to temperature elevation to and retention at a predetermined temperature, to generate the calibration curve. Based on a weight loss ratio obtained from measurement of an unknown sample, the ratio of the pigment to the resin can be calculated.

The ratio of the resin to the organic solvent in the pigment-dispersed resin solution is preferably 1.0 or greater but 3.0 or less, more preferably 1.2 or greater but 2.5 or less, and yet more preferably 1.4 or greater but 2.0 or less. When the ratio of the resin to the organic solvent is 1.1 or greater, the emulsifying speed of the resin in the step 3 is high, and the pigment-encapsulating resin particles can have a small particle diameter. When the ratio of the resin to the organic solvent is 3.0 or less, the reaction system can be suppressed from viscosity increase and can be stirred at a good efficiency, leading to suppression of generation of coarse particles.

<Pigment-encapsulating resin particle dispersion liquid preparing step (step 3)>

The pigment-encapsulating resin particle dispersion liquid preparing step is a step of mixing the obtained pigment-dispersed resin solution and water to prepare a pigment-encapsulating resin particle dispersion liquid (water dispersion liquid).

The mixing stirring device used in the pigment-encapsulating resin particle dispersion liquid is not particularly limited and may be appropriately selected depending on the intended purpose. Examples of the device include, but are not limited to the devices described in the pigment pre-dispersion preparing step. Among these devices, a high-speed stirring device including an anchor blade or a disper blade is preferable in terms of uniform stirring. The higher the energy applied for dispersing, the smaller the particle diameter of the pigment-encapsulating resin particles to be produced. However, when the energy is excessively high, there may be a case where the pigment-encapsulating resin particles produced may be broken and cannot maintain the encapsulating state.

The procedure for mixing the pigment-dispersed resin solution and water is not particularly limited. Water may be added to the pigment-dispersed resin solution, or the pigment-dispersed resin solution may be added to water. It is preferable to add water to the pigment-dispersed resin solution.

The water adding rate is preferably 10 parts by mass/min or higher but 1,000 parts by mass/min or lower, and more preferably 30 parts by mass/min or higher but 500 parts by mass/min or lower relative to 100 parts by mass or the resin. When the water adding rat is 10 parts by mass/min or higher but 1,000 parts by mass/min or lower, it is possible to suppress pigment flocculation in the system and consequently suppress coarsening of the pigment-encapsulating resin particles.

In terms of dispersion stability of the pigment-encapsulating resin particles, the addition amount of water is preferably 70 parts by mass or greater but 700 parts by mass or less and more preferably 100 parts by mass or greater but 500 parts by mass or less relative to 100 parts by mass of the resin used in the pigment-dispersed resin solution preparing step.

The reaction temperature in the pigment-encapsulating resin particle dispersion liquid preparing step is preferably 20 degrees C or higher but 80 degrees C or lower and more preferably 30 degrees C or higher but 60 degrees C or lower.

<Organic solvent removing step (step 4)>

The organic solvent removing step is a step of removing the organic solvent from the obtained pigment-encapsulating resin particle dispersion liquid. When the organic solvent is removed from the pigment-encapsulating resin particle dispersion liquid, an aqueous dispersion of the present disclosure described below is obtained.

The method for removing the organic solvent from the pigment-encapsulating resin particle dispersion liquid is not particularly limited, and a known removing device can be used. It is preferable to heat the pigment-encapsulating resin particle dispersion liquid at a temperature higher than or equal to the boiling point of the organic solvent in a pressure-reduced environment. Examples of the known removing device include, but are not limited to, a rotary evaporator.

The pressure in the pressure-reduced environment is preferably 200 mmHg or lower and more preferably 100 mmHg or lower.

The heating temperature is preferably 20 degrees C or higher but 80 degrees C or lower and more preferably 30 degrees C or higher but 60 degrees C or lower.

As needed, coarse particles may be filtrated off from the obtained aqueous dispersion by, for example, a filter and a centrifuge.

-Resin-

The ink of the present disclosure may further contain any other resin depending on the intended purpose, in addition to the resin contained in the pigment-encapsulating resin particles.

-Surfactant-

It is preferable that the ink of the present disclosure contain a surfactant.

The proportion of the surfactant is preferably 3% by mass or greater but less than 10% by mass relative to the total amount of the ink.

When the proportion of the surfactant is 3% by mass or greater, the ink can wet and spread on a non-permeating substrate and form a uniform coating film. When the proportion of the surfactant is less than 10% by mass, it is possible to suppress degradation of adhesiveness with a non-permeating substrate.

The method for measuring the proportion of the surfactant in the aqueous dispersion is not particularly limited and may be appropriately selected depending on the intended purpose. For example, the proportion of the surfactant can be measured with a high-speed liquid chromatograph (LC-20, available from Shimadzu Corporation).

The HLB value of the surfactant is not particularly limited, may be appropriately selected depending on the intended purpose, and is preferably 10 or greater but 13 or less. In this range, the ink has an appropriate wettability on a non-permeating substrate and can be suppressed from being repelled.

The HLB value represents hydrophile lipophile balance of the surfactant. The HLB value takes a value of from 0 through 20. As the HLB value is closer to 0, lipophilicity is higher. As the HLB value is closer to 20, hydrophilicity is higher. The HLB value is defined by the formula below (griffin method).

$$\text{HLB value} = 20 \times (\text{sum of formula weights of hydrophilic moiety/molecular weight})$$

The HLB value of a surfactant mixture is the weighted average of the HLB values of the respective components.

<Print medium>

The print medium is not particularly limited, and plain paper, gloss paper, special paper, and cloth can be used. However, a good image can also be formed on a non-permeating substrate.

The non-permeating substrate (hereinafter, may also be referred to as "non-permeating medium") has a surface with low moisture permeability and absorbency and includes a material having myriad of hollow spaces inside but not open to the outside. To be more quantitative, the substrate has a water-absorption amount of 10 mL/m$^2$ or less between the contact and 30 msec$^{1/2}$ after the contact according to Bristow method.

For example, plastic films of vinyl chloride resin, polyethylene terephthalate (PET), polypropylene, and polyethylene, are suitably used for the non-permeating substrate.

Examples of the vinyl chloride resin films include, but are not limited to, CPPVWP1300 (available from Sakurai Co., Ltd.) and MPI1000 (available from AVERY DENNISON CORPORATION).

Examples of the polyethylene terephthalate (PET) films include, but are not limited to, VIEWFUL TP-188 (available from Kimoto Co., Ltd.).

Polypropylene and polyethylene are not particularly limited. Examples of polypropylene and polyethylene include, but are not limited to, AR1025, AR1056, AR1082, EC1082, 1082D, 1073D, 1056D, 1025D, and FR1073 (available from DuPont-Asahi Flash Spun Products Co., Ltd.), P2002, P2102, P2108, P2161, P2171, P2111, P4266, P5767, P3162, P6181, P8121, P1162, P1111, P1128, P1181, P1153, P1157, P1146, P1147, and P1171 (available from Toyobo Co., Ltd.), and YPI, AQUA YUPO, SUPER YUPO, ULTRA YUPO, NEW YUPO, YUPO LIGHTING PAPER, YUPO PAPER FOR BUILDING MATERIAL, YUPO HIGH GLOSS, YUPO JET, and METALLIC YUPO (available from Yupo Corporation).

Among these non-permeating substrates, MPI1000 (available from AVERY DENNISON CORPORATION), which is a vinyl chloride resin film, is preferable.

The print medium is not limited to articles used as typical print media. It is suitable to use building materials such as wall paper, floor material, and tiles, cloth for apparel such as T-shirts, textile, and leather as the print medium. In addition, the configuration of the paths through which the print medium is conveyed can be adjusted to accommodate ceramics, glass, metal, etc.

<Heating step>

The heating step is a step of heating the print medium to which the ink is applied using a heating mechanism. The temperature of the heating mechanism contacting the print medium is 60 degrees C or higher.

Examples of the heating mechanism include, but are not limited to, a unit configured to heat a printed surface or a back surface of the print medium to which the ink is applied. Specific examples of the heating unit include, but are not limited to, an infrared heater, a hot air heater, a heating roller, a hot plate, a high-frequency heater, and a microwave heater. One of these heaters may be used alone or two or more of these heaters may be used in combination. Among these heaters, a hot plate is preferable.

The method for heating the print medium is not particularly limited and may be appropriately selected depending on the intended purpose. Examples of the method include, but are not limited to, a method of bringing a heated fluid such as hot air serving as the heating mechanism into contact with the print medium to which the ink is applied, a method of bringing the print medium to which the ink is applied and a heating member into contact with each other to heat the print medium by heat transfer, and a method of heating the print medium to which the ink is applied by irradiation with energy rays such as infrared rays and far-infrared rays.

The heating temperature in the heating step is 60 degrees C or higher, preferably 60 degrees C or higher but 80 degrees C or lower, and more preferably 73 degrees C or higher but 80 degrees C or lower. When the heating temperature is 60 degrees C or higher, ink droplets tend not to join each other, and ink repelling is suppressed, making it possible to obtain an image having a high image density and gloss. The heating drying step may be performed before and after printing, in addition to heating during printing.

<Printing apparatus>

The ink of the present disclosure can be suitably applied to various printing devices employing an inkjet printing method such as printers, facsimile machines, photocopiers, multifunction peripherals (serving as a printer, a facsimile machine, and a photocopier), and 3D model manufacturing devices.

In the present disclosure, the printing device and the printing method represent a device capable of discharging ink, various processing fluids, etc. to a print medium and a method printing an image on the print medium using the device. The print medium means an article to which the ink or the various processing fluids can be attached at least temporarily.

The printing device may further optionally include a device relating to feeding, conveying, and ejecting the print medium and other devices referred to as a pre-processing device, a post-processing device, etc. in addition to the head portion to discharge the ink.

The printing device is not limited to one that produces merely meaningful visible images such as texts and figures with the ink. For example, the printing device a can produce patterns like geometric design and 3D images. In addition, the printing device includes both a serial type device in which the liquid discharging head is caused to move and a line type device in which the liquid discharging head is not moved, unless otherwise specified.

Furthermore, in addition to the desktop type, this printing device includes a wide type capable of printing images on a large print medium such as A0, a continuous printer capable of using continuous paper wound up in a roll form as print media.

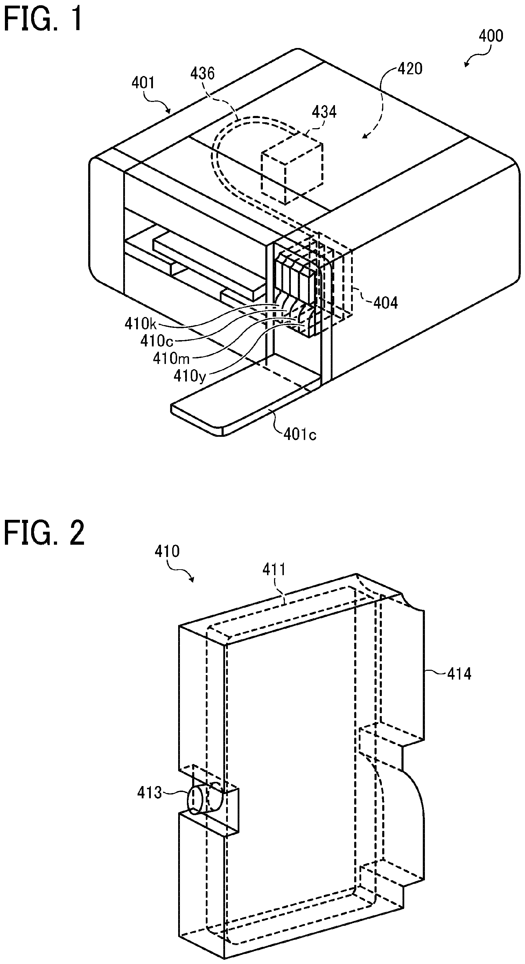

The printing device used in the image forming method of the present disclosure is described using an example with reference to FIG. 1 and FIG. 2.

FIG. 1 is a perspective view of the image printing device.

FIG. 2 is a perspective view of the main tank.

An image forming apparatus 400 as an example of the printing device is a serial type image forming apparatus. A mechanical unit 420 is disposed in an exterior 401 of the image forming apparatus 400. Each ink container 411 of each main tank 410 (410k, 410c, 410m, and 410y) for each color of black (K), cyan (C), magenta (M), and yellow (Y) is made of a packing member such as aluminum laminate film. The ink container 411 is accommodated in a plastic housing unit 414. As a result, the main tank 410 is used as an ink cartridge of each color.

A cartridge holder 404 is disposed on the rear side of the opening when a cover 401c of the main body is opened. The cartridge holder 404 is detachably attached to the main tank 410. As a result, each ink discharging outlet 413 of the main tank 410 is communicated with a discharging head 434 for each color via a supplying tube 436 for each color so that the ink can be discharged from the discharging head 434 to a print medium.

Examples

The present disclosure will be described below by way of Examples. The present disclosure should not be construed as being limited to these Examples. In the following description, any value represented by "part" represents "part by mass" and any value represented by "%" represents "% by mass" unless otherwise particularly specified.

As the resin to be used for preparing pigment-encapsulating resin particles, a self-emulsifying resin: polyester resin α was synthesized in the manner described below.

<Synthesis of self-emulsifying resin: polyester resin α>

A 500 mL four-necked flask equipped with a nitrogen introducing pipe, a dehydrating pipe, a stirrer, and a thermocouple was charged with the materials described below, and the materials were mixed.

- Adduct of bisphenol A with 2 moles of ethylene oxide (4,4'-isopropylidene bis(2-phenoxyethanol), obtained from FUJIFILM Wako Chemicals Co., Ltd., diol): 275 parts by mass
- Adduct of bisphenol A with 2 moles of propylene oxide (BA-P2 glycol, obtained from Nippon Nyukazai Co., Ltd., diol): 79 parts by mass
- Dimethyl isophthalate (obtained from Tokyo Chemical Industry Co., Ltd., dicarboxylic acid): 140 parts by mass
- Adipic acid (obtained from Tokyo Chemical Industry Co., Ltd., dicarboxylic acid): 26 parts by mass

After the flask was sufficiently purged with a nitrogen gas, 300 ppm of titanium tetraisopropoxide (obtained from FUJIFILM Wako Pure Chemical Corporation) relative to the monomers (total of adduct of bisphenol A with 2 moles of ethylene oxide, adduct of bisphenol A with 2 moles of propylene oxide, dimethyl isophthalate, and adipic acid) was added. The resultant was subjected to temperature elevation to 200 degrees C for about 4 hours under a nitrogen gas airflow. Next, the resultant was subjected to temperature elevation to 230 degrees C for 2 hours, to allow the materials to react until no effluent flowed out. Subsequently, the pressure was reduced to from 5 mmHg through 30 mmHg, and the resultant was allowed to react for 1 hour, to obtain a polyester resin.

The obtained polyester resin had an acid value AV of 0.5 mgKOH/g, a glass transition temperature Tg of 47 degrees C, and a weight average molecular weight Mw of 5,000.

The obtained polyester resin (160 parts by mass) was melted at 180 degrees C under a nitrogen gas airflow. Next, trimellitic anhydride (6 parts by mass) was added to the resultant, which was then stirred for 40 minutes to adjust the acid value of the polyester resin, to obtain a polyester resin α having an acid value AV of 20 mgKOH/g, a glass transition temperature Tg of 51 degrees C, and a weight average molecular weight Mw of 5,100.

The "acid value AV", the "glass transition temperature Tg", and the "weight average molecular weight Mw" of the resin were measured in the manners described below.

-Measuring method for acid value AV-

The acid value of the resin was measured by a method of adding the resin to a tetrahydrofuran (THF) solution, and titrating the resultant with a 0.1 M potassium hydroxide methanol solution.

-Measuring method for glass transition temperature Tg-

The glass transition temperature was measured by the measuring method described below, according to differential scanning calorimetry (DSC).

[Measuring method]

The resin particles were added into a petri dish, and dried at 70 degrees C for 1 hour, and then at 130 degrees C for 3 hours, to obtain a solid product. The obtained solid product was measured using a differential scanning calorimeter (DSC) (Q2000 obtained from TA Instruments, Inc.) under the following measurement conditions according to the following measurement flow.

(Measurement conditions)

- Sample container: Sample pan formed of aluminum (with a lid)
- Amount of sample: 5 mg
- Reference sample pan formed of aluminum (empty container)
- Atmosphere: nitrogen (flow rate: 50 mL/min)

(Measurement flow)

- Start temperature: -80 degrees C
- Temperature elevation rate: 10 degrees C/min (first temperature elevation process)
- End temperature: 130 degrees C
- Retention time: 1 min
- Temperature lowering rate: 10 degrees C/min
- End temperature: -80 degrees C
- Retention time: 5 min
- Temperature elevation rate: 10 degrees C/min (second temperature elevation process)
- End temperature: 130 degrees C

The sample was measured under the conditions described above, and a graph of "endothermic or exothermic amount" vs. "temperature" was plotted.

A characteristic inflection observed in the first temperature elevation process was determined as the glass transition temperature (Tg). A value obtained from the DSC curved by a mid-point method was used as Tg.

-Measuring method for weight average molecular weight Mw-

- Instrument: GPC (obtained from Tosoh Corporation)
- Detector: RI
- Measurement temperature: 40 degrees C
  Mobile phase: tetrahydrofuran
- Flow rate: 0.45 mL/min

The weight average molecular weight (Mw) was measured by gel permeation chromatography (GPC) using a calibration curve generated with polystyrene samples having known molecular weights as a reference. Columns used had exclusion limits of 60,000, 20,000, and 10,000 and were serially coupled with each other for use.

(Preparation example 1)

<Preparation of pigment-encapsulating resin particles 1>

Next, pigment-encapsulating resin particles 1 were prepared through the step 1 to the step 4 described below.

-Step 1: Preparation of pigment pre-dispersion A-

The materials prescribed as described below were mixed, and added into a 110 mL screw tube bottle formed of glass. Subsequently, zirconia balls having a diameter of 2.0 mm (obtained from Nikkato Corporation, YTZ BALL) (170 parts by mass) were added to the resultant. The bottle was secured on a shaker (obtained from IKA, VIBRAX VXR BASIC), to subject the materials to dispersion treatment at 1,000 rpm for 24 hours.

- Carbon black (SBX45, obtained from Asahi Carbon Co., Ltd., with a primary particle diameter of 22 nm, and a DBP absorption of 55 mL/100 g): 15.0 parts by mass
- Methyl ethyl ketone: 41.2 parts by mass
- Pigment dispersant (AJISPER PB821, obtained from Ajinomoto Fine-Techno Co., Inc., hydrophobic): 3.8 parts by mass

Subsequently, the dispersion liquid was filtrated through a PTFE membrane filter having an average pore diameter of 5.0 micrometers, to prepare a pigment pre-dispersion A (with a pigment solid concentration of 25% by mass). The volume average particle diameter D50 of the pigment pre-dispersion A by a zeta potential/particle diameter measuring system (ELSZ-1000, obtained from Otsuka Electronics Co., Ltd.) was 110 nm.
The volume average particle diameter D50 was measured in the manner described below.
The volume average particle diameter D50 was measured using a zeta potential/particle diameter measuring system (ELSZ-1000, obtained from Otsuka Electronics Co., Ltd.) according to a dynamic light scattering method.
Specifically, a measurement sample was diluted with ion-exchanged water or, as needed, an organic solvent in a manner that the solid concentration of the sample would be 0.01% by mass. The obtained solution was partially poured into a quartz cell, set on a sample holder, and measured at a temperature of 25 degrees C, with dust cutting (number of times; 5, Upper: 5, and Lower: 100), by an integrated number of times of 70.

-Step 2: Preparation of pigment-dispersed resin solution A-

The pigment pre-dispersion A (42 g), and the polyester resin $\alpha$ (30 g) were added into a 0.3 L separable flask equipped with a stirrer (THREE-ONE MOTOR, obtained from Shinto Scientific Co., Ltd.), an anchor blade, and a thermocouple in a manner that the mass ratio (P/R) of the pigment (P: Pigment, carbon black) to the polyester resin (R: Resin) would be 0.35, and mixed and stirred at 40 degrees C, to obtain a pigment-dispersed resin solution A.

-Step 3: Encapsulation of pigment with resin-

At a reduced pressure, methyl ethyl ketone was removed from the resultant in a manner that the mass ratio (R/S) of the polyester resin $\alpha$ to methyl ethyl ketone (S: Solvent) would be 1.4.
Next, in order to neutralize the acid value of the polyester resin $\alpha$, triethylamine (1.1 g) in an amount equivalent to a carboxyl group was added, and the resultant was mixed and stirred for 0.5 hours. Under stirring at a rate of 350 rpm, ion-exchanged water (64 g) was dropped into the resultant at a rate of 15 ml/min, and the resultant was stirred for 20 minutes, to prepare pigment-encapsulating resin particles encapsulating the pigment with the resin.

-Step 4: Preparation of water dispersion-

Next, methyl ethyl ketone was removed from the resultant by evaporation at a reduced pressure using an evaporator, and the resultant was filtrated and purified through a nylon net having a mesh size of 67 micrometers.

Ion-exchanged water was added to the resultant in a manner that the solid concentration would be 30%, to obtain a water dispersion of the pigment-encapsulating resin particles 1.

The obtained pigment-encapsulating resin particles 1 were observed with a transmission electron microscope (obtained from JEOL Ltd., JEM-2100F) at an accelerating voltage of 200 kV at a magnification of ×40,000. As a result, it was successfully confirmed that the pigment-encapsulating resin particles 1 contained two or more primary particles of the pigment.

The "pigment exposure ratio (%) of the pigment-encapsulating resin particles", the "aspect ratio of the pigment-encapsulating resin particles", and the "sphericity of the pigment- encapsulating resin particles" were measured in the manners described below.

[Pigment exposure ratio (%) of pigment-encapsulating resin particles]

First, an ink containing the pigment-encapsulating resin particles was diluted with ion-exchanged water in a manner that the solid concentration would be 0.1%, to produce a sample liquid.

Next, the sample liquid was poured by 1 microliter onto a hydrophilized collodion membrane pasted-mesh (a collodion membrane-pasted mesh CU150 MESH obtained from Nisshin EM Co., Ltd.) with a micropipette, and quickly sucked away with filter paper cut into a triangular shape.

Next, an EM stainer diluted ten-fold was poured by 1 microliter with a micropipette, and quickly sucked away with filter paper cut into a triangular shape.

After drying at reduced pressure, the resultant was observed with a transmission electron microscope (JEM-2100F obtained from JEOL Ltd.) at an accelerating voltage of 200 kV at a magnification of ×40,000.

Five or more images representing a field of view including three or more particles having a volume-based particle diameter of 100 nm or greater were captured at arbitrary different positions, to measure three or more pigment-encapsulating resin particles in each field of view and calculate the average as the "pigment exposure ratio (%) of the pigment- encapsulating resin particles".

To measure the region of the "pigment" and the region of the "resin" in a pigment- encapsulating resin particle, the regions were distinguished by comparison between an image of the "pigment" alone and an image of a "particle formed of the resin alone" observed separately.

[Aspect ratio of pigment-encapsulating resin particle]

The aspect ratio of the pigment-encapsulating resin particles was calculated based on observation of the pigment-encapsulating resin particles with the transmission electron microscope (TEM) described above.

Specifically, a plurality of images representing a field of view including pigment-encapsulating resin particles that did not overlap with any other particles were captured at arbitrary different observation positions. An arbitrary pigment-encapsulating resin particle was selected and extracted by binarization using a "FIJI" application of image processing software (IMAGE J), and analyzed. Twenty particles were analyzed. A ratio (longer diameter/shorter diameter) of the longer diameter to the shorter diameter of a pigment-encapsulating resin particle was calculated from the twenty pigment-encapsulating resin particles, and the average (average aspect ratio) of the values was calculated. For calculation of the ratio of the longer diameter to the shorter diameter, the length of an axis (longer axis) having the longest length from any end of a particle to an opposite end of the particle was defined as the longer diameter, and the length of the particle in the direction orthogonally intersecting the longer axis at the center of the longer axis was defined as the shorter diameter.

[Sphericity of pigment-encapsulating resin particles]

The sphericity of the pigment-encapsulating resin particles is a value defined as the second power of [(area of an extracted particle × 4π)/perimeter of the extracted particle].

The sphericity of the pigment-encapsulating resin particles was calculated by observing the pigment-encapsulating resin particles and measuring the area of the pigment-encapsulating resin particles on a flat observation surface and the perimeter of the particles on the same surface according to the same observation method for the pigment-encapsulating resin particles using the transmission electron microscope (TEM) as in the method for calculating the aspect ratio of the pigment-encapsulating resin particles.

(Preparation example 2)

<Preparation of pigment-encapsulating resin particles 2>

Pigment-encapsulating resin particles 2 were obtained in the same manner as in Preparation example 1, except that unlike in Preparation example 1, a pigment-dispersed resin solution B was prepared by adding the pigment pre-dispersion A (60 g) and the polyester resin $\alpha$ (30 g) in a manner that the mass ratio (P/R) of the pigment (P: Pigment, carbon black) to the polyester resin $\alpha$ (R: Resin) would be 0.5, and mixing and stirring the resultant at 40 degrees C.
The obtained pigment-encapsulating resin particles 2 were observed with a transmission electron microscope (obtained from JEOL Ltd., JEM-2100F) at an accelerating voltage of 200 kV at a magnification of $\times 40,000$. As a result, it was successfully confirmed that the pigment-encapsulating resin particles 2 contained two or more primary particles of the pigment.

(Preparation example 3)

<Preparation of pigment-encapsulating resin particles 3>

Pigment-encapsulating resin particles 3 were obtained in the same manner as in Preparation example 1, except that unlike in Preparation example 1, a pigment-dispersed resin solution C was prepared by adding the pigment pre-dispersion A (24 g) and the polyester resin $\alpha$ (30 g) in a manner that the mass ratio (P/R) of the pigment (P: Pigment, carbon black) to the polyester resin $\alpha$ (R: Resin) would be 0.2, and mixing and stirring the resultant at 40 degrees C.
The obtained pigment-encapsulating resin particles 3 were observed with a transmission electron microscope (obtained from JEOL Ltd., JEM-2100F) at an accelerating voltage of 200 kV at a magnification of $\times 40,000$. As a result, it was successfully confirmed that the pigment-encapsulating resin particles 3 contained two or more primary particles of the pigment.

<Image formation>

An inkjet printer (apparatus name: IPSIO GXE5500 remodeled apparatus, obtained from Ricoh Company, Ltd.) was washed by passing pure water through an ink supplying path including a printing head. Pure water was sufficiently passed through the ink supplying path until the washing liquid was no more stained. The apparatus was completely drained of the washing liquid and used as the printing apparatus for evaluation.
An ink cartridge was filled with a prepared ink and used as an ink cartridge for evaluation.
The apparatus was caused to perform a filling operation, to confirm that all nozzles were filled with the ink for evaluation, and no abnormal image would be printed. After a "gloss paper-beautiful" mode was selected from a driver provided as an attachment to the printer, "color matching-off" was selected as the printing mode from user setting.
By changing of the head drive voltage, the discharging amount was adjusted in a manner that the amount of the ink to be attached on a print medium for printing a solid image (having a size of 4 cm $\times$ 18 cm) would be 20 g/m$^2$.
Under these image forming conditions, a solid image was printed on a polyvinyl chloride film (MPI1000, obtained from AVERY DENNISON CORPORATION, hereinafter, may be referred to as "PVC film") serving as a print medium.
The IPSIO GXE5500 remodeled apparatus was obtained by remodeling an IPSIO GXE5500 apparatus to be capable of realizing printing at a printing speed of 30 m$^2$/hr on a A4 size with a printing width of 150 cm, and to include a hot plate (NINOS ND-1, obtained from As One Corporation) on a conveying path of a print medium to be capable of heating a print medium from the back during printing and changing the heating temperature during printing. After a solid image was printed, the solid image was dried on a hot plate (NINOS ND-1, obtained from As One Corporation) set at 80 degrees C for 10 minutes.

(Example 1)

<Preparation of ink 1>

The materials described below were mixed, and filtrated through a membrane filter having an average pore diameter of 10 micrometers, to prepare an ink 1 in which the mass ratio (pigment/resin=P/R) of the pigment to the resin in the ink was 0.35. The viscosity of the obtained ink at 25 degrees C was 7.5 mPa·s.

- Pigment-encapsulating resin particles 1: 10.75% by mass (a solid concentration relative to the total amount of the ink)
- Propylene glycol: about 40% by mass (adjusted to a viscosity of 7.5 mPa·s)
- Silicone-based surfactant (obtained from Nissin Chemical Co., Ltd., SILFACE SAG503A, with a HLB value of 11): 3.0% by mass
- Aliphatic dialcohol-based surfactant (obtained from Nissin Chemical Co., Ltd., SURFYNOL AD01): 0.10% by mass
- Water: balance (total: 100% by mass)

According to the image forming method described above, an image was formed with the obtained ink 1 with a heating temperature during printing set at 73 degrees C.

(Example 2)

An image was formed in the same manner as in Example 1, except that an ink 2 prepared by adding the silicone-based surfactant by 5.0% by mass unlike in Example 1 was used.

(Example 3)

An image was formed in the same manner as in Example 1, except that an ink 3 prepared by using the pigment-encapsulating resin particles 2 instead of the pigment-encapsulating resin particles 1 unlike in Example 1 was used.

(Example 4)

An image was formed in the same manner as in Example 1, except that the heating temperature during printing was set to 60 degrees C unlike in Example 1.

(Example 5)

An image was formed in the same manner as in Example 1, except that an ink prescribed as below was used.

- Pigment-encapsulating resin particles 1: 10.75% by mass (a solid concentration relative to the total amount of the ink)
- Propylene glycol: 40% by mass (adjusted to a viscosity of 7.5 mPa·s)
- Silicone-based surfactant (obtained from Nissin Chemical Co., Ltd., SILFACE SAG503A): 1.5% by mass
- Silicone-based surfactant (obtained from Evonik Industries AG, TEGO WET270, with a HLB value of 9.8): 1.5% by mass
- Aliphatic dialcohol-based surfactant (obtained from Nissin Chemical Co., Ltd., SURFYNOL AD01): 0.10% by mass
- Water: balance (total: 100% by mass)

(Example 6)

An image was formed in the same manner as in Example 1, except that an ink 8 prescribed as below was used.

- Pigment-encapsulating resin particles 1: 10.75% by mass (a solid concentration relative to the total amount of the ink)
- Propylene glycol: 40% by mass (adjusted to a viscosity of 7.5 mPa·s)
- Silicone-based surfactant (obtained from Evonik Industries AG, TEGO WET270, with a HLB value of 8.6): 3.0% by mass
- Aliphatic dialcohol-based surfactant (obtained from Nissin Chemical Co., Ltd., SURFYNOL AD01): 0.10% by mass
- Water: balance (total: 100% by mass)

(Comparative Example 1)

An image was formed in the same manner as in Example 1, except that an ink 4 prepared by adding the silicone-based surfactant by 1.0% by mass unlike in Example 1 was used.

(Comparative Example 2)

An image was formed in the same manner as in Comparative Example 1, except that the heating temperature during printing was set to 50 degrees C unlike in Comparative Example 1.

(Comparative Example 3)

An image was formed in the same manner as in Example 1, except that the heating temperature during printing was set to 50 degrees C unlike in Example 1.

(Comparative Example 4)

An image was formed in the same manner as in Example 1, except that an ink 5 prepared by not using the pigment-encapsulating resin particles 1, but by mixing resin particles a and an aqueous pigment dispersion I in a manner that P/R would be 0.35 as described below was used unlike in Example 1

-Preparation of ink 4-

- Resin particles a: 7.96% by mass (a solid concentration relative to the total amount of the ink)
- Aqueous pigment dispersion I: 2.79% by mass (a solid concentration relative to the total amount of the ink)
- Propylene glycol: about 40% by mass (adjusted to a viscosity of 7.5 mPa·s)
- Silicone-based surfactant (obtained from Nissin Chemical Co., Ltd., SILFACE SAG503A): 3.0% by mass
- Aliphatic dialcohol-based surfactant (obtained from Nissin Chemical Co., Ltd., SURFYNOL AD01): 0.10% by mass
- Water: balance (total: 100% by mass)

-Preparation of resin particles a-

The materials described below were added into a 0.3 L separable flask equipped with a stirrer (THREE-ONE MOTOR), an anchor blade, a thermocouple, and a reflux condenser, and mixed and stirred at 40 degrees C, to obtain a resin solution.

- Polyester resin $\alpha$: 25 g
- Methyl ethyl ketone: 14 g

Next, in order to neutralize the acid value of polyester, triethylamine (0.84 g) in an amount equivalent to a carboxyl group was added, and the resultant was stirred for 20 minutes. Under stirring at a rate of 350 rpm, ion-exchanged water (53 g) was dropped into the resultant at a rate of 15 ml/min, and the resultant was stirred for 20 minutes, to prepare resin particles.
Finally, methyl ethyl ketone was removed from the resultant by evaporation at a reduced pressure using an evaporator, and the resultant was filtrated and purified through a nylon net having a mesh size of 67 micrometers.
Ion-exchanged water was added to the resultant in a manner that the solid concentration would be 30%, to obtain resin particles a having a volume average particle diameter D50 of 78 nm.

-Aqueous pigment dispersion I-

A pigment dispersant $\alpha$ (3.8 parts by mass) prepared in the manner described below was dissolved in a diethanolamine aqueous solution (30.0 parts by mass) in a manner that pH would be 8.0.
Ion-exchanged water was further added to the resultant, to prepare the aqueous solution in a total amount of 45.0 parts by mass.
Next, the materials prescribed below were mixed, and added into a 110 ml screw tube bottle formed of glass. Subsequently, zirconia balls having a diameter of 2.0 mm (obtained from Nikkato Corporation, YTZ BALL) (170 parts by mass) were added to the resultant. The bottle was secured on a shaker (obtained from IKA, VIBRAX VXR BASIC), to subject the materials to dispersion treatment at 1,000 rpm for 24 hours.

- Carbon black (SBX45, obtained from Asahi Carbon Co., Ltd.): 15.0 parts by mass
- Pigment dispersant $\alpha$: 45.0 parts by mass

Subsequently, the dispersion liquid was filtrated through a cellulose acetate membrane filter having an average pore diameter of 5.0 micrometers, to prepare an aqueous pigment dispersion I. The volume average particle diameter D50 of the aqueous pigment dispersion I by a zeta potential/particle diameter measuring system (ELSZ-1000, obtained from Otsuka Electronics Co., Ltd.) was 120 nm.

--Preparation of pigment dispersant α--

1,6-Hexanediol (obtained from Tokyo Chemical Industry Co., Ltd.) (62.0 parts by mass) was dissolved in dichloromethane (700 ml). Pyridine (obtained from Tokyo Chemical Industry Co., Ltd.) (20.7 parts by mass) was added to the resultant. The resultant was stirred. Into this solution, a solution obtained by dissolving 2-naphthalene carbonyl chloride (obtained from Tokyo Chemical Industry Co., Ltd.) in dichloromethane (100 ml) was dropped for 2 hours. Subsequently, the resultant was stirred at room temperature for 6 hours.

The obtained solution was washed with water. An organic layer was isolated from the resultant, and dried with magnesium sulfate, to evaporate the solvent.

The residue was refined by silica gel column chromatography using a mixture solvent of dichloromethane/methanol (at a volume ratio of 98/2) as an eluent, to obtain a compound.

Next, the obtained compound (42.1 parts by mass) was dissolved in dry methyl ethyl ketone (80 ml), and heated at 60 degrees C under stirring.

Into this solution, a solution obtained by dissolving KARENZ MOI (obtained from Showa Denko K.K.) (24.0 parts by mass) in dry methyl ethyl ketone (20 ml) was dropped for 1 hour. Subsequently, the resultant was stirred at 70 degrees C for 12 hours.

After the resultant was cooled to room temperature, the solvent was evaporated from the resultant.

The residue was refined by silica gel column chromatography using a mixture solvent of dichloromethane/methanol (at a volume ratio of 99/1) as an eluent, to obtain a monomer.

Next, acrylic acid (obtained from Tokyo Chemical Industry Co., Ltd.) (2.30 parts by mass), the monomer (8.54 g), and 2,2'-azobis(isobutyronitrile) (obtained from Tokyo Chemical Industry Co., Ltd.) (0.31 parts by mass) were dissolved in methyl ethyl ketone (100 ml), and stirred under a nitrogen gas airflow at a temperature condition of 75 degrees C for 5 hours.

Subsequently, the reaction solution cooled to room temperature was repeatedly reprecipitated five times using hexane, to refine a copolymer. After the refining treatment, the copolymer was filtrated and dried at reduced pressure, to obtain the pigment dispersant α.

(Comparative Example 5)

An image was formed in the same manner as in Example 1, except that an ink 6 prepared by not using the pigment-encapsulating resin particles 1, but by mixing resin particles a and a styrene-acrylic-based resin-coated black pigment dispersion in a manner that P/R would be 0.35 as described below was used unlike in Example 1

-Preparation of ink 6-

- Resin particles a: 7.96% by mass (a solid concentration relative to the total amount of the ink)
- Styrene-acrylic-based resin-coated black pigment dispersion: 2.79% by mass (a solid concentration relative to the total amount of the ink)
- Propylene glycol: about 40% by mass (adjusted to a viscosity of 7.5 mPa·s)
- Silicone-based surfactant (obtained from Nissin Chemical Co., Ltd., SILFACE SAG503A): 3.0% by mass
- Aliphatic dialcohol-based surfactant (obtained from Nissin Chemical Co., Ltd., SURFYNOL AD01): 0.10% by mass
- Water: balance (total: 100% by mass)

-Preparation of styrene-acrylic-based resin-coated black pigment dispersion-

Styrene (11.2 g), acrylic acid (2.8 g), lauryl methacrylate (12 g), polyethylene glycol methacrylate (4 g), styrene macromer (4 g), and mercapto ethanol (0.4 g) were mixed, and subjected to temperature elevation to 65 degrees C.

Next, a mixture solution of styrene (100.8 g), acrylic acid (25.2 g), lauryl methacrylate (108 g), polyethylene glycol methacrylate (36 g), hydroxylethyl methacrylate (60 g), styrene macromer (36 g), mercapto ethanol (3.6 g), azobis methyl valeronitrile (2.4 g), and methyl ethyl ketone (18 g) was dropped into a flask for 2.5 hours.

After dropping, a mixture solution of azobis methyl valeronitrile (0.8 g) and methyl ethyl ketone (18 g) was dropped into the flask for 0.5 hours.

The resultant was aged at 65 degrees C for 1 hour, and subsequently further aged for 1 hour with addition of azobis methyl valeronitrile (0.8 g).

After a reaction ended, methyl ethyl ketone (364 g) was added into the flask, to obtain a polymer solution A (800 g) having a solid concentration of 50%.

Next, the polymer solution A (28 g), carbon black (obtained from Cabot Corporation, BLACK PEARLS 1000) (42 g), a 1 mol/L potassium hydroxide aqueous solution (13. 6 g), methyl ethyl ketone (20 g), and water (13.6 g) were stirred sufficiently, and subsequently kneaded using a roll mill.

The obtained paste was added to pure water (200 g) and stirred sufficiently. Subsequently, methyl ethyl ketone was removed from the resultant with an evaporator. The resultant was subjected to pressure filtration through a polyvinylidene fluoride membrane filter having an average pore diameter of 5 micrometers. Subsequently, the amount of water in the resultant was adjusted in a manner that the solid concentration would be 20%, to obtain a styrene-acrylic-based resin-coated black pigment dispersion having a solid concentration of 20%.

(Comparative Example 6)

An image was formed in the same manner as in Example 1, except that an ink 7 prepared by changing the pigment-encapsulating resin particles 1 used in Example 1 to the pigment-encapsulating resin particles 3.

Next, various properties of each prepared ink were evaluated in the manners described below. The results are presented in Table 1.

<Existence ratio of pigment-encapsulating resin particles in ink>

First, each obtained ink was diluted with ion-exchanged water in a manner that the solid concentration would be 0.1% by mass, to prepare a sample liquid.

Next, the sample liquid was poured by 1 microliter onto a hydrophilized collodion membrane pasted-mesh (a collodion membrane-pasted mesh CU150 MESH obtained from Nisshin EM Co., Ltd.) with a micropipette, and quickly sucked away with filter paper cut into a triangular shape.

Next, an EM stainer diluted ten-fold was poured by 1 microliter with a micropipette, and quickly sucked away with filter paper cut into a triangular shape.

After drying at reduced pressure, the resultant was observed with a transmission electron microscope (JEM-2100F obtained from JEOL Ltd.) at an accelerating voltage of 200 kV at a magnification of ×40,000. Five or more images representing a field of view including three or more particles having a volume-based particle diameter of 100 nm or greater were captured at arbitrary different positions, to calculate a ratio occupied by the number of pigment-encapsulating resin particles in the total number of particles having a volume-based particle diameter of 100 nm or greater in each image, and calculate the average of the ratios calculated from all of the images captured. The obtained ratio was defined as the existence ratio of the pigment-encapsulating resin particles, and evaluated according to the evaluation criteria described below.

The volume-based particle diameter was obtained by measuring the longest diameter of one particle, calculating the volume of the particle assuming that the particle was a true sphere, and multiplying the particle diameter of the particle by the volume of the particle. The obtained product was defined as the volume-based particle diameter.

<Pigment exposure ratio>

The pigment exposure ratio on the surface of a coating film was calculated based on observation with a scanning electron microscope (SEM).

Specifically, first, using ion-exchanged water, each ink was prepared in a manner that the solid concentration would be 10.75% by mass. Next, the ink was applied on coated paper (LUMIART GLOSS 130, obtained from Stora Enso Oyj) using a 0.15 mm bar coater, and dried overnight at 25 degrees C, to form a coating film having an average thickness of 2 micrometers.

The coating film was cut out, and secured on a SEM observation stub using a carbon tape. Without being subjected to a conductivity imparting treatment, the resultant was observed using a scanning electron microscope (obtained from Zeiss AG, MERLIN) at an accelerating voltage of 0.75 kV at a magnification of ×20,000 using a backscattered-electron detector. It would be possible to distinguish between the exposed pigment and the resin on the surface of the coating film based on the backscattered electron yield difference between the pigment (carbon black) and the resin.

The area occupied by the pigment on the entire coating film at the magnification of ×20,000 was defined as the pigment exposure ratio.

As the ratio of the area occupied by the exposed pigment on the surface of the coating film, the average of three fields of view, at arbitrary different observation positions, of a binarized version of the SEM observed image was used. For binarization of the SEM observed image, a binarization process that would automatically start when a default algorithm of image processing software (IMAGE-J) was selected was performed.

<Contact angle of ink>

A PVC film (obtained from AVERY DENNISON CORPORATION, MPI1000) was heated on a hot plate (NINOS ND-1, obtained from As One Corporation). The heating temperature was set to the same as the heating temperature during printing, described in each Example. After ten minutes passed, the ink (5 microliters) was dropped onto the PVC film. The state of a resultant ink droplet was observed in a horizontal direction, and the contact angle θm of the ink droplet on the PVC film was measured using an automatic contact angle meter (obtained from Kyowa Interface Science Co., Ltd.). Because measured values of the contact angle would change depending on the time that had passed since the ink droplet was dropped, the contact angle was measured five seconds after dropping, and an average value of five measurements was used as the measurement.

<Image density>

The total density (OD) of the obtained printed image was measured using a spectrophotometric densitometer (X-RITE 939, obtained from X-Rite, Inc.) in a state that white plain paper was placed below the printed image. The value of black (K) was defined as the image density and evaluated according to the evaluation criteria described below.

[Evaluation criteria]

A: The OD was 2.0 or higher.
B: The OD was 1.8 or higher but lower than 2.0.
C: The OD was 1.6 or higher but lower than 1.8.
D: The OD was lower than 1.6.

<Glossiness>

The 20-degree glossiness of the obtained printed image was measured using a micro trigloss obtained from BYK Gardner GmbH in a state that white plain paper was placed below the printed image, and evaluated according to the evaluation criteria described below.

[Evaluation criteria]

A: The 20-degree glossiness was 10 or higher.
B: The 20-degree glossiness was 5 or higher but lower than 10.
C: The 20-degree glossiness was 3 or higher but lower than 5.
D: The 20-degree glossiness was lower than 3.

<Surface roughness>

The obtained image was observed with a scanning probe microscope (SPM) under the conditions described below, and the surface roughness (Sa arithmetic mean height) of the image was calculated according to ISO 25178.
The image was observed at arbitrary different positions, to average the measurements in three fields of view and calculate an average surface roughness. The average surface roughness was evaluated according to the evaluation criteria described below.

[Measurement conditions]

- Instrument: Scanning probe microscope (obtained from Bruker Corporation, DIMENSION ICON)
- Cantilever: OMCL-AC240TS obtained from Olympus Corporation
- Measuring mode: Tapping mode
- Observation range: 2 micrometers on four sides

[Evaluation criteria]

A: The average surface roughness was less than 10.
B: The average surface roughness was 10 or greater but less than 30.
C: The average surface roughness was 30 or greater but less than 40.
D: The average surface roughness was 40 or greater.

<Filling ratio>

A photo of the obtained solid image was taken using a High Resolution Module of a handy image evaluation system PIAS-II (obtained from Trek Japan Corporation). The ratio of an ink attached area (a ratio of an area occupied by an ink attached portion in the area of the entire printed portion) was obtained by binarization of the taken photo, and evaluated according to the criteria described below. For binarization of the taken photo, a binarization process that would automatically start when a default algorithm of image processing software (IMAGE-J) was selected was performed.

[Evaluation criteria]

A: The ink attached area was 97% or greater.

B: The ink attached area was 92% or greater but less than 97%.

D: The ink attached area was less than 92%.

Table 1-1

| | | Ex. | | | | | |
|---|---|---|---|---|---|---|---|
| | | 1 | 2 | 3 | 4 | 5 | 6 |
| Ink property | Ink contact angle $\theta$m (°) | 17 | 19 | 18 | 25 | 16 | 13 |
| | Pigment exposure ratio (%) | 0 | 0 | 0 | 0 | 0 | 0 |
| | Pigment/Resin ratio | 0.35 | 0.35 | 0.5 | 0.35 | 0.35 | 0.35 |
| | Aspect ratio of pigment-encapsulating resin particles | 1.1 | 1.1 | 1.2 | 1.1 | 1.1 | 1.1 |
| | Sphericity of pigment-encapsulating resin particles | 0.84 | 0.84 | 0.89 | 0.84 | 0.84 | 0.84 |
| | Existence ratio (%) of pigment-encapsulating resin particles | 100 | 100 | 100 | 100 | 100 | 100 |
| Evaluation result | Image density | B | B | A | B | C | C |
| | Glossiness | A | A | A | B | C | C |
| | Surface roughness | A | A | A | B | C | C |
| | Filling ratio | A | A | A | B | B | B |

Table 1-2

| | | Comp. Ex. | | | | | |
|---|---|---|---|---|---|---|---|
| | | 1 | 2 | 3 | 4 | 5 | 6 |
| Ink property | Ink contact angle θm (°) | 34 | 34 | 31 | 16 | 15 | 18 |
| | Pigment exposure ratio (%) | 0 | 0 | 0 | 15 | 13 | 0 |
| | Pigment/Resin ratio | 0.35 | 0.35 | 0.35 | 0.35 | 0.35 | 0.2 |
| | Aspect ratio of pigment-encapsulating resin particles | 1.1 | 1.1 | 1.1 | - | - | 1.0 |
| | Sphericity of pigment-encapsulating resin particles | 0.84 | 0.84 | 0.84 | - | - | 0.86 |
| | Existence ratio (%) of pigment-encapsulating resin particles | 100 | 100 | 100 | 0 | 0 | 100 |
| Evaluation result | Image density | D | D | D | D | D | D |
| | Glossiness | D | D | D | B | B | B |
| | Surface roughness | B | B | B | D | D | B |
| | Filling ratio | D | D | D | A | A | A |

Aspects of the present disclosure are, for example, as follows.

<1> An image forming method, including:

applying an ink to a print medium, the ink containing pigment-encapsulating resin particles comprising a pigment and a resin encapsulating the pigment, and
heating the print medium to which the ink is applied at a heating temperature of 60 degrees C or higher,
wherein a proportion of the pigment alone exposed without being encapsulated with the resin is 10% by mass or less relative to solid components contained in the ink,
a mass ratio of the pigment to the resin in the pigment-encapsulating resin particles is 0.25 or greater but 1.0 or less, and
a contact angle θm (°) of the ink when the ink is dropped by 5 microliters onto a print medium at 73 degrees C is 25° or less.

<2> The image forming method according to <1>,
wherein the print medium is a non-permeating medium.
<3> The image forming method according to <1> or <2>,
wherein the ink further contains a surfactant.
<4> The image forming method according to <3>,
wherein a proportion of the surfactant is 3% by mass or greater but less than 10% by mass relative to the ink.
<5> The image forming method according to <3> or <4>,
wherein a HLB value of the surfactant is 10 or greater but 13 or less.
<6> The image forming method according to any one of <1> to <5>,
wherein the heating temperature in the heating is 60 degrees C or higher but 80 degrees C or lower.
<7> The image forming method according to any one of <1> to <6>,
wherein an aspect ratio of the pigment-encapsulating resin particles is 1.0 or greater but 1.7 or less.
<8> The image forming method according to any one of <1> to <7>,
wherein a sphericity of the pigment-encapsulating resin particles is 0.7 or greater but 1.0 or less.
<9> The image forming method according to any one of <1> to <8>,
wherein the resin contained in the pigment-encapsulating resin particles is a polyester resin.
<10> The image forming method according to <9>,
wherein the polyester resin contains a carboxyl group, and is a self-emulsifying resin.
<11> The image forming method according to any one of <1> to <10>,
wherein the pigment is an inorganic pigment.
<12> The image forming method according to <11>,

wherein the inorganic pigment is carbon black.
<13> The image forming method according to <11> or <12>,
wherein the pigment-encapsulating resin particles each contain two or more primary particles of the inorganic pigment.
<14> The image forming method according to any one of <1> to <13>,
wherein a volume-based cumulative 50% diameter of the ink obtained by a laser diffraction method is 30 nm or greater but 300 nm or less.
<15> A printed matter formed by the image forming method according to any one of <1> to <14>.

The image forming method according to any one of <1> to <14>, and the printed matter according to <15> can solve the various problems in the related art and achieve the object of the present disclosure.

**Claims**

1.  An image forming method, comprising:

    applying an ink to a print medium, the ink containing pigment-encapsulating resin particles comprising a pigment and a resin encapsulating the pigment, and
    heating the print medium to which the ink is applied at a heating temperature of 60 degrees C or higher,
    wherein a proportion of the pigment alone exposed without being encapsulated with the resin is 10% by mass or less relative to solid components contained in the ink,
    a mass ratio of the pigment to the resin in the pigment-encapsulating resin particles is 0.25 or greater but 1.0 or less, and
    a contact angle $\theta m$ (°) of the ink when the ink is dropped by 5 microliters onto a print medium at 73 degrees C is 25° or less.

2.  The image forming method according to claim 1,
    wherein the print medium is a non-permeating medium.

3.  The image forming method according to claim 1 or 2,
    wherein the ink further contains a surfactant.

4.  The image forming method according to claim 3,
    wherein a proportion of the surfactant is 3% by mass or greater but less than 10% by mass relative to the ink.

5.  The image forming method according to claim 3 or 4,
    wherein a HLB value of the surfactant is 10 or greater but 13 or less.

6.  The image forming method according to any one of claims 1 to 5,
    wherein the heating temperature in the heating is 60 degrees C or higher but 80 degrees C or lower.

7.  The image forming method according to any one of claims 1 to 6,
    wherein an aspect ratio of the pigment-encapsulating resin particles is 1.0 or greater but 1.7 or less.

8.  The image forming method according to any one of claims 1 to 7,
    wherein a sphericity of the pigment-encapsulating resin particles is 0.7 or greater but 1.0 or less.

9.  The image forming method according to any one of claims 1 to 8,
    wherein the resin contained in the pigment-encapsulating resin particles is a polyester resin.

10. The image forming method according to claim 9,
    wherein the polyester resin contains a carboxyl group, and is a self-emulsifying resin.

11. The image forming method according to any one of claims 1 to 10,
    wherein the pigment is an inorganic pigment.

12. The image forming method according to claim 11,

wherein the inorganic pigment is carbon black.

13. The image forming method according to claim 11 or 12,
wherein the pigment-encapsulating resin particles each contain two or more primary particles of the inorganic pigment.

14. The image forming method according to any one of claims 1 to 13,
wherein a volume-based cumulative 50% diameter of the ink obtained by a laser diffraction method is 30 nm or greater but 300 nm or less.

15. A printed matter formed by the image forming method according to any one of claims 1 to 14.

FIG. 1

FIG. 2

# FIG. 3A

# FIG. 3B

## FIG. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019099819 A
- JP 2019014883 A
- JP 2002256181 A
- JP 63087279 A
- JP 2020055996 A

- JP 2016196621 A
- JP 2002322396 A
- JP 2005120136 A
- WO 2009014242 A